# EUROPÄISCHE PATENTANMELDUNG

(11) **EP 3 698 613 A1**
(43) Veröffentlichungstag der Anmeldung: **26.08.2020**
(21) Anmeldenummer: 19401055.9
(22) Anmeldetag: 17.12.2019
(51) Int. Cl.: A01C 7/04, A01C 7/10, A01C 17/00

(54) **VERFAHREN ZUM ERMITTELN EINER KONFIGURATION EINER FÖRDEREINRICHTUNG FÜR KÖRNIGES MATERIAL**

(30) Priorität: 20.02.2019 DE 102019104293
(71) Anmelder: Amazonen-Werke H. Dreyer GmbH & Co. KG, 49205 Hasbergen (DE)
(72) Erfinder: Teckemeyer, Stephan, 49504 Lotte (DE)

(57) **Zusammenfassung**

Die Erfindung betrifft ein Verfahren zum Ermitteln einer geeigneten Konfiguration einer rotatorisch angetriebenen Fördereinrichtung (10) für körniges Material (100) einer Dosiereinrichtung einer landwirtschaftlichen Ausbringmaschine, mit den Schritten: Ermitteln von Eigenschaften des auszubringenden körnigen Materials (100) und Bestimmen einer geeigneten Konfiguration der Fördereinrichtung (10) auf Grundlage der ermittelten Eigenschaften des auszubringenden körnigen Materials (100), wobei das Ermitteln der Eigenschaften des auszubringenden körnigen Materials (100) das Erzeugen und Auswerten einer Bildaufnahme einer Materialprobe des auszubringenden körnigen Materials (100) umfasst.

## Beschreibung

Die Erfindung betrifft ein Verfahren zum Ermitteln einer geeigneten Konfiguration einer rotatorisch angetriebenen Fördereinrichtung für körniges Material nach dem Oberbegriff des Patentanspruchs 1, ein portables elektronisches Gerät nach dem Oberbegriff des Patentanspruchs 9 und ein System nach dem Oberbegriff des Patentanspruchs 10.

Bei einigen landwirtschaftlichen Ausbringmaschinen, insbesondere bei Sämaschinen, welche für die Aussaat von Getreide konzipiert sind, werden volumetrisch arbeitende Systeme eingesetzt. Bei solchen volumetrisch arbeitenden Systemen werden einem Luftstrom einzelne Saatkörner zugeführt, wobei die Kornzuführung über eine maschineninterne Dosiereinrichtung umgesetzt wird.

Derartige Dosiereinrichtungen weisen häufig eine Fördereinrichtung auf, deren Konfiguration auf das auszubringende Saatgut abzustimmen ist. Beispielsweise ist die Fördereinrichtung mit geeigneten Mitnehmerelementen für das auszubringende Saatgut auszustatten. Eine entsprechende Dosiereinrichtung wird beispielsweise in der Druckschrift EP 2 987 395 A1 beschrieben.

Das Ermitteln der geeigneten Mitnehmerelemente erfolgt bisher manuell durch den Benutzer, nämlich unter Verwendung einer sogenannten Schüttelbox. Entsprechende Schüttelboxen weisen mehrere Kammern auf, welche durch unterschiedliche Siebe voneinander getrennt sind. Zum Ermitteln der geeigneten Mitnehmerelemente ist eine Saatgutprobe in die Schüttelbox einzufüllen, wobei sich das Saatgut aufgrund einer Schüttelbewegung auf die Kammern der Schüttelbox aufteilt. In Abhängigkeit der sich ergebenden Aufteilung der Saatgutprobe auf die Kammern der Schüttelbox kann dann ein geeignetes Mitnehmerelement bestimmt werden.

Die beschriebene Methode ist jedoch vergleichsweise aufwendig, da abhängig von dem auszubringenden Saatgut und dessen Tausendkorngewicht unterschiedliche Siebe in die Schüttelbox einzusetzen sind, um verwertbare Ergebnisse erzielen zu können. Außerdem ist die Ermittlungsmethode abhängig von der korrekten Handhabung des Benutzers, sodass das Risiko einer Fehlermittlung vergleichsweise hoch ist.

Diese und andere Methoden zum Ermitteln einer geeigneten Konfiguration einer rotatorisch angetriebenen Fördereinrichtung für körniges Material sind außerdem vergleichsweise unpräzise und fehleranfällig.

Die der Erfindung zugrundeliegende Aufgabe besteht somit darin, die korrekte Konfiguration einer rotatorisch angetriebenen Fördereinrichtung für körniges Material einer Dosiereinrichtung einer landwirtschaftlichen Ausbringmaschine zu vereinfachen und/oder zu beschleunigen. Ferner soll das Ermitteln einer geeigneten Konfiguration mit einer höheren Präzision erfolgen.

Die Aufgabe wird gelöst durch ein Verfahren der eingangs genannten Art, wobei im Rahmen des erfindungsgemäßen Verfahrens das Ermitteln der Eigenschaften des auszubringenden körnigen Materials das Erzeugen und Auswerten einer Bildaufnahme einer Materialprobe des auszubringenden körnigen Materials umfasst.

Die Erfindung macht sich die Erkenntnis zunutze, dass die Größen- und/oder Formeigenschaften von körnigem Material äußerst präzise über eine entsprechende Bildauswertung bestimmt werden können. Somit ist eine manuelle Bestimmung der Eigenschaften des auszubringenden körnigen Materials mittels einer Schüttelbox nicht länger erforderlich. Das auf einer Bildaufnahme beruhende Verfahren führt außerdem zu einer erheblichen Beschleunigung des Ermittlungsvorgangs. Insbesondere wird durch das Erzeugen und Auswerten einer Bildaufnahme auch der Benutzungskomfort der landwirtschaftlichen Ausbringmaschine erheblich gesteigert.

Die Materialprobe des auszubringenden körnigen Materials befindet sich beim Erzeugen der Bildaufnahme vorzugsweise auf einer Prüfunterlage, wobei die Prüfunterlage beispielsweise eine Prüfmatte sein kann. Alternativ kann sich die Materialprobe des auszubringenden körnigen Materials beim Erzeugen der Bildaufnahme auch in einem Prüfbehältnis befinden. Die Prüfunterlage oder das Prüfbehältnis weisen vorzugsweise eine Farbe auf, die eine Erkennung der aufgegebenen Materialprobe des auszubringenden körnigen Materials begünstigt. Dazu können sie eine Farbe aufweisen, die zur Farbe des auszubringenden körnigen Materials einen möglichst großen Kontrast aufweist. Besonders bevorzugt können sie eine Farbe aufweisen, die zur Farbe möglichst vieler gängiger auszubringender körnigen Materialien einen möglichst großen Kontrast aufweist.

Das Prüfbehältnis kann vorzugsweise transparent oder teiltransparent ausgebildet sein.

Die Prüfunterlage oder das Prüfbehältnis können beispielsweise eine Skala aufweisen, welche als Größenreferenz beim Auswerten der Bildaufnahme Verwendung finden kann. Alternativ oder zusätzlich kann die Größe der Prüfunterlage oder des Prüfbehältnisses bekannt sein, sodass die gesamte Prüfunterlage oder das gesamte Prüfbehältnis als Referenzobjekt bei der Auswertung der Bildaufnahme dienen kann. So kann beispielsweise eine Korngrößenbestimmung im Rahmen der Auswertung der Bildaufnahme erfolgen. Alternativ oder zusätzlich kann die Bildaufnahme auch mit einem vordefinierten Abstand und/oder mit vorgegebenen Aufnahmeparametern erfolgen, sodass eine Korngrößenbestimmung ohne ein Referenzobjekt oder eine Referenzskala erfolgen kann. Die Fördereinrichtung der Dosiereinrichtung kann vorzugsweise eine Förderscheibe umfassen.

In einer bevorzugten Ausführungsform des erfindungsgemäßen Verfahrens erfolgt das Erzeugen und/oder Auswerten der Bildaufnahme der Materialprobe des auszubringenden körnigen Materials durch ein portables elektronisches Gerät mit einer Datenverarbeitungseinrichtung. Das portable elektronische Gerät kann ein portables Mobilfunkgerät, insbesondere ein Smartphone, sein. Das portable elektronische Gerät weist vorzugsweise eine Kamera auf, mittels welcher die Bildaufnahme der Materialprobe des auszubringenden körnigen Materials erzeugt werden kann. Vorzugsweise ist das portable elektronische Gerät dazu eingerichtet, Größen- und/oder Formeigenschaften des körnigen Materials zu ermitteln. Vorzugsweise erfolgt das Bestimmen der geeigneten Konfiguration der Fördereinrichtung ebenfalls durch das portable elektronische Gerät. Vorzugsweise umfasst das portable elektronische Gerät einen Datenspeicher, auf welchem Referenzdaten zum Bestimmen der geeigneten Konfiguration der Fördereinrichtung auf Grundlage der ermittelten Materialeigenschaften hinterlegt sind.

In einer weiteren bevorzugten Ausführungsform des erfindungsgemäßen Verfahrens erfolgt das Auswerten der Bildaufnahme der Materialprobe des auszubringenden körnigen Materials durch einen entfernten Zentralcomputer. Der entfernte Zentralcomputer kann beispielsweise ein Server sein, welcher über eine Drahtlosverbindung Daten mit dem portablen elektronischen Gerät austauschen kann. Der Server kann beispielsweise von einem Hersteller für landwirtschaftliche Ausbringmaschinen betrieben werden. Wenn das Auswerten der Bildaufnahme durch einen entfernten Zentralcomputer erfolgt, umfasst das Verfahren vorzugsweise das Senden von Bilddaten von dem portablen elektronischen Gerät an den Zentralcomputer. Das Bestimmen der geeigneten Konfiguration der Fördereinrichtung kann in diesem Fall entweder durch den entfernten Zentralcomputer oder durch das portable elektronische Gerät erfolgen.

In einer Weiterbildung des erfindungsgemäßen Verfahrens umfasst das Auswerten der Bildaufnahme der Materialprobe des auszubringenden körnigen Materials das Ermitteln von Korngrößen- und/oder Kornformeigenschaften des auszubringenden Materials. Das Auswerten der Bildaufnahme kann beispielsweise das Ermitteln des Korngrößenspektrums des auszubringenden Materials bzw. der Materialprobe umfassen. Einzelnen Korngrößenbereichen ist vorzugsweise jeweils eine Konfiguration der Fördereinrichtung zugeordnet. Über diese Zuordnungen kann dann das Bestimmen der geeigneten Konfiguration der Fördereinrichtung erfolgen. Die Zuordnungen sind vorzugsweise auf einer Datenbank hinterlegt. Die Datenbank kann auf dem portablen elektronischen Gerät oder auf dem entfernten Zentralcomputer gespeichert sein.

In einer anderen Ausführungsform des erfindungsgemäßen Verfahrens weist die Fördereinrichtung eine oder mehrere Aufnahmen auf, in welche unterschiedliche Mitnehmerelemente zum Transport des körnigen Materials einsetzbar sind. Das Bestimmen einer geeigneten Konfiguration der Fördereinrichtung umfasst vorzugsweise das Bestimmen zumindest eines geeigneten Mitnehmerelements. Die unterschiedlichen Mitnehmerelemente sind zum Dosieren von unterschiedlichen körnigen Materialien geeignet, sodass zum Ausbringen unterschiedlicher körniger Materialien auch unterschiedliche Mitnehmerelemente zu verwenden sind. Die Mitnehmerelemente weisen vorzugsweise jeweils eine Kornaufnahmetasche auf, welcher das körnige Material zum Transport zugeleitet wird und innerhalb welcher sich das körnige Material während des Transports durch die Fördereinrichtung befindet. Die unterschiedlichen Mitnehmerelemente können sich beispielsweise in Bezug auf Größe und/oder Form der Kornaufnahmetasche unterscheiden. Einzelnen Korngrößenbereichen ist vorzugsweise jeweils ein Mitnehmerelement zugeordnet. Sofern also im Rahmen der Auswertung der Bildaufnahme ein Korngrößenbereich der untersuchten Materialprobe ermittelt wird, kann über die Zuordnung des ermittelten Korngrößenbereichs zu einem Mitnehmerelement eine geeignete Konfiguration der Fördereinrichtung bestimmt werden.

Es ist außerdem ein erfindungsgemäßes Verfahren vorteilhaft, bei welchem die zuvor bestimmte geeignete Konfiguration der Fördereinrichtung ausgegeben wird. Das Ausgeben der zuvor bestimmten geeigneten Konfiguration der Fördereinrichtung umfasst vorzugsweise das Ausgeben eines geeigneten Mitnehmerelements zum Dosieren des auszubringenden körnigen Materials. Das Ausgeben der zuvor bestimmten geeigneten Konfiguration der Fördereinrichtung bzw. des geeigneten Mitnehmerelements erfolgt vorzugsweise über das portable elektronische Gerät. Das Ausgeben erfolgt insbesondere durch ein optisches Anzeigen der zuvor bestimmten geeigneten Konfiguration der Fördereinrichtung bzw. des geeigneten Mitnehmerelements über eine Anzeigeeinrichtung, beispielsweise einen Touchscreen, des portablen elektronischen Geräts.

Darüber hinaus ist ein Verfahren bevorzugt, bei welchem die Eignung der Fördereinrichtung zum Dosieren des auszubringenden körnigen Materials auf Grundlage der ermittelten Eigenschaften des auszubringenden körnigen Materials und unter Berücksichtigung der Konfigurationsmöglichkeiten der Fördereinrichtung untersucht wird. Hinsichtlich der Konfigurationsmöglichkeiten kann eine Anzahl von unterschiedlichen Mitnehmerelementen berücksichtigt werden, welche in die eine oder die mehreren Aufnahmen der Fördereinrichtung einsetzbar sind und welche zum Dosieren von unterschiedlichen körnigen Materialien geeignet sind. Das Untersuchen der Eignung der Fördereinrichtung zum Dosieren des auszubringenden körnigen Materials wird vorzugsweise von dem portablen elektronischen Gerät oder einem entfernten Zentralcomputer durchgeführt. Das Untersuchen der Eignung der Fördereinrichtung zum Dosieren des auszubringenden körnigen Materials umfasst vorzugsweise das Untersuchen des Ausmaßes der Korngrößenstreuung des auszubringenden körnigen Materials bzw. der Materialprobe, insbesondere auf Grundlage des ermittelten Korngrößenspektrums. Vorzugsweise sind Korngrößenstreuungen, für welche die Fördereinrichtung geeignet ist, und Korngrößenstreuungen, für welche die Fördereinrichtung ungeeignet ist, auf einer Datenbank hinterlegt. Vorzugsweise erfolgt im Rahmen der Eignungsuntersuchung ein Abruf dieser Daten von der Datenbank. Die Datenbank kann Bestandteil des portablen elektronischen Geräts oder des entfernten Zentralcomputers sein.

In einer anderen Ausführungsform des erfindungsgemäßen Verfahrens erfolgt das Ausgeben des Ergebnisses der zuvor untersuchten Eignung der Fördereinrichtung zum Dosieren des auszubringenden körnigen Materials. Das Ausgeben des Ergebnisses erfolgt vorzugsweise über das portable elektronische Gerät. Insbesondere erfolgt das Ausgeben des Ergebnisses über ein optisches Anzeigen des Ergebnisses mittels einer Anzeigeeinrichtung, insbesondere eines Touchscreens, des portablen elektronischen Geräts.

Die der Erfindung zugrundeliegende Aufgabe wird ferner durch ein portables elektronisches Gerät der eingangs genannten Art gelöst, wobei das erfindungsgemäße portable elektronische Gerät dazu eingerichtet ist, das Verfahren nach einer der vorstehend beschriebenen Ausführungsformen auszuführen. Hinsichtlich der Vorteile und Modifikationen des erfindungsgemäßen portablen elektronischen Geräts wird zunächst auf die Vorteile und Modifikationen des erfindungsgemäßen Verfahrens verwiesen. Die Bildaufnahmeeinrichtung des portablen elektronischen Geräts kann eine Kamera sein. Auf dem portablen elektronischen Gerät kann eine Anwendung installiert sein, über welche das Erzeugen und/oder Auswerten der Bildaufnahme und/oder das Bestimmen der geeigneten Konfiguration der Fördereinrichtung erfolgt.

Die der Erfindung zugrundeliegende Aufgabe wird ferner durch ein System der eingangs genannten Art gelöst, wobei das erfindungsgemäße System dazu eingerichtet ist, das Verfahren nach einer der vorstehend beschriebenen Ausführungsformen auszuführen. Hinsichtlich der Vorteile und Modifikationen des erfindungsgemäßen Systems wird auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel eines erfindungsgemäßen portablen elektronischen Geräts beim Ausführen des erfindungsgemäßen Verfahrens;
- Fig. 2: eine Fördereinrichtung mit unterschiedlichen Mitnehmerelementen in einer schematischen Darstellung;
- Fig. 3: das Korngrößenspektrum eines körnigen Materials;
- Fig. 4: das Korngrößenspektrum eines weiteren körnigen Materials; und
- Fig. 5: das Korngrößenspektrum eines weiteren körnigen Materials.

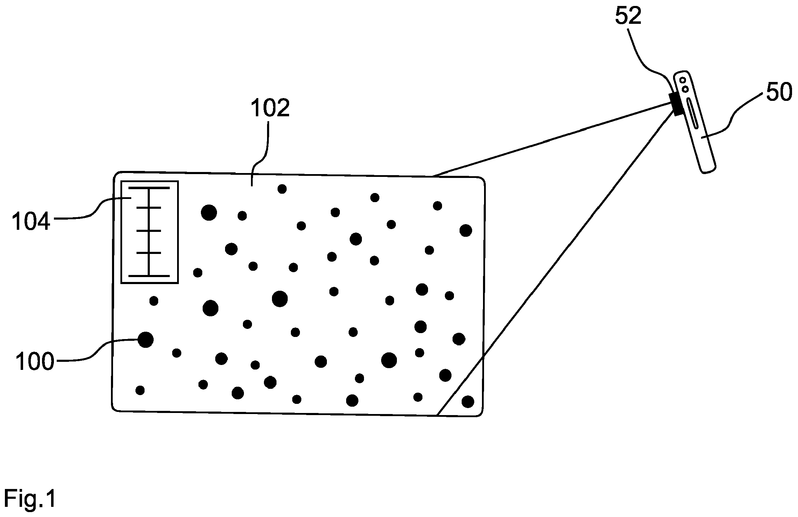

Die Fig. 1 zeigt körniges Material 100, welches als Getreide-Saatgut ausgebildet ist. Das körnige Material 100 soll mittels einer als Sämaschine ausgebildeten landwirtschaftlichen Ausbringmaschine auf einer landwirtschaftlichen Nutzfläche ausgebracht, also eingesät werden. Die landwirtschaftliche Ausbringmaschine weist eine Dosiereinrichtung auf, über welche einem Luftstrom eine geeignete Menge an Saatgut hinzudosiert wird. Die Dosiereinrichtung weist eine Fördereinrichtung 10 für körniges Material auf, mittels welcher das körnige Material 100 vor der Hinzudosierung in den Luftstrom vereinzelt wird.

Die in der Dosiereinrichtung verwendete Fördereinrichtung 10 muss zum Dosieren des auszubringenden körnigen Materials 100 geeignet sein und eine für das körnige Material 100 geeignete Konfiguration aufweisen. Zum Ermitteln der Eignung der Fördereinrichtung 10 zum Dosieren des auszubringenden körnigen Materials 100 und zum Ermitteln einer geeigneten Konfiguration der Fördereinrichtung 10 für das körnige Material 100 wird eine Materialprobe des körnigen Materials 100 auf eine Prüfunterlage 102 ausgebracht. Die Prüfunterlage 102 ist als Prüfmatte ausgebildet und umfasst eine Referenzskala 104, welche zum Bestimmen der Korngrößen Verwendung findet.

Mittels des portablen elektronischen Geräts 50, welches als Smartphone ausgebildet ist und eine Kamera 52 umfasst, wird zum Ermitteln der Eigenschaften des körnigen Materials 100 eine Bildaufnahme der auf die Prüfunterlage 102 ausgebrachten Materialprobe erzeugt. Die von dem portablen elektronischen Gerät 50 erzeugte Bildaufnahme wird dann über eine Datenverarbeitungseinrichtung des portablen elektronischen Geräts 50 ausgewertet. Das Auswerten der Bildaufnahme der Materialprobe des körnigen Materials 100 umfasst das Ermitteln von Korngrößen- und Kornformeigenschaften des körnigen Materials 100.

Auf Grundlage der ermittelten Korngrößen- und Kornformeigenschaften des körnigen Materials 100 kann dann eine geeignete Konfiguration der Fördereinrichtung 10 zum Dosieren des körnigen Materials 100 bestimmt werden. Die Konfigurationsbestimmung wird ebenfalls durch das portable elektronische Gerät 50 durchgeführt.

Das Auswerten der Bildaufnahme der Materialprobe des körnigen Materials 100 und/oder das Bestimmen der geeigneten Konfiguration der Fördereinrichtung 10 kann alternativ auch durch einen entfernten Zentralcomputer erfolgen, wobei das portable elektronische Gerät 50 in diesem Fall dazu eingerichtet ist, drahtlos Daten mit dem entfernten Zentralcomputer auszutauschen.

Nachdem eine geeignete Konfiguration der Fördereinrichtung 10 durch das portable elektronische Gerät 50 bestimmt worden ist, kann die zuvor bestimmte geeignete Konfiguration der Fördereinrichtung 10 über das Display des portablen elektronischen Geräts 50 ausgegeben werden, sodass ein Benutzer die Fördereinrichtung 10 entsprechend konfigurieren kann.

Im Rahmen des Verfahrens erfolgt außerdem eine Untersuchung, ob die Fördereinrichtung 10 zum Dosieren des auszubringenden körnigen Materials 100 überhaupt geeignet ist. Die Eignungsuntersuchung basiert ebenfalls auf den ermittelten Korngrößen- und Kornformeigenschaften des körnigen Materials 100, wobei die realisierbaren Konfigurationsmöglichkeiten der Fördereinrichtung 10 berücksichtigt werden. Falls keine der möglichen Konfigurationen der Fördereinrichtung 10 für die Ausbringung des körnigen Materials 100 geeignet ist, erfolgt die Ausgabe eines entsprechenden Hinweises an den Benutzer des elektronischen portablen Geräts 50, wobei der Hinweis über das Display des portablen elektronischen Geräts 50 ausgegeben wird.

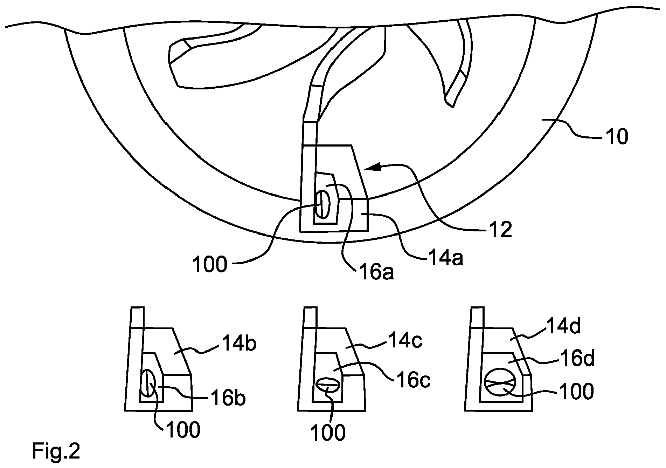

Die Fig. 2 zeigt eine Fördereinrichtung 10, welche eine Förderscheibe umfasst. Die Förderscheibe weist mehrere Ausnehmungen 12 auf, in welche unterschiedliche Mitnehmerelemente 14a-14d zum Transport von körnigem Material 100 einsetzbar sind. Über die unterschiedlichen Mitnehmerelemente 14a-14d lassen sich also unterschiedliche Konfigurationen der Fördereinrichtung 10 umsetzen. Die unterschiedlichen Mitnehmerelemente 14a-14d sind jeweils zum Dosieren von unterschiedlichen körnigen Materialien geeignet. Die Mitnehmerelemente 14a-14d weisen jeweils eine Kornaufnahmetasche 16a-16d auf, welcher das körnige Material 100 zum Transport zugeleitet wird und innerhalb welcher sich das körnige Material 100 während des Transports durch die Fördereinrichtung 10 befindet. Die unterschiedlichen Mitnehmerelemente 14a-14d unterscheiden sich in Bezug auf die Größe der Kornaufnahmetasche 16a-16d. Die einzelnen Mitnehmerelemente 14a-14d sind unterschiedlichen Korngrößenbereichen B1-B4 zugeordnet.

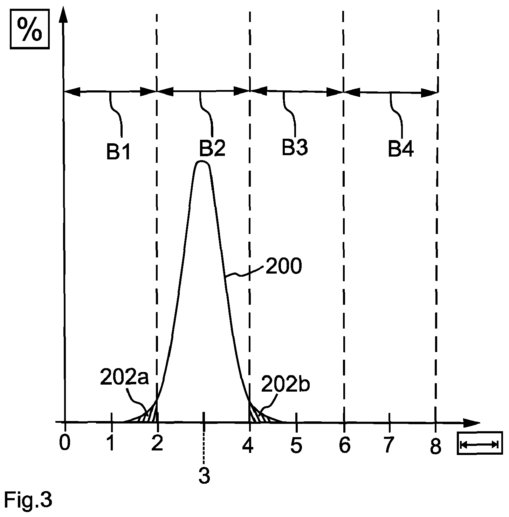

Die Fig. 3 bis Fig. 5 zeigen beispielhaft unterschiedliche Korngrößenbereiche B1-B4 im Zusammenhang mit unterschiedlichen Korngrößenspektren 200. Die dargestellten Korngrößenspektren 200 können beispielsweise im Rahmen der Auswertung der Bildaufnahme einer Materialprobe ermittelt werden.

Das körnige Material 100, welches dem in Fig. 3 dargestellten Korngrößenspektrum 200 zugrunde liegt, weist hauptsächlich Korngrößen im Korngrößenbereich B2 auf. Lediglich geringfügige Teilmengen 202a, 202b des körnigen Materials 100 weisen eine Größe auf, welche den Korngrößenbereichen B1 bzw. B3 zuzuordnen sind. Das auszubringende körnige Material 100 weist keine Körner auf, deren Größe dem Korngrößenbereich B4 zuzuordnen ist. Somit ist zum Ausbringen des körnigen Materials die Konfiguration der Fördereinrichtung 10 zu wählen, welche dem Korngrößenbereich B2 zugeordnet ist. Dies kann beispielsweise die Verwendung von Mitnehmerelementen 16a-16d bedeuten, welche dem Korngrößenbereich B2 zugeordnet sind.

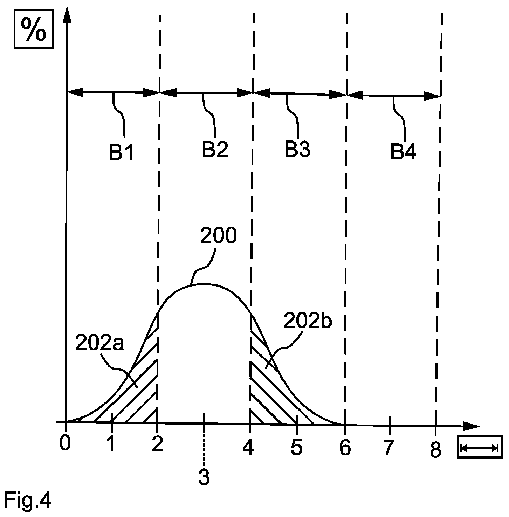

Die Fig. 4 zeigt das Korngrößenspektrum 200 eines anderen auszubringenden Materials 100. Erneut weist ein Großteil der Körner des Materials 100 eine Korngröße auf, welche dem Korngrößenbereich B2 zuzuordnen ist. Die Teilmengen 202a, 202b an Körnern, deren Größe den Korngrößenbereichen B1 und B3 zuzuordnen sind, überschreiten jedoch einen Grenzwert, sodass mit keinem zufriedenstellenden Ausbringergebnis zu rechnen ist. In diesem Fall wäre also keine mögliche Konfiguration der Fördereinrichtung 10 geeignet, um das körnige Material in geeigneter Weise zu dosieren.

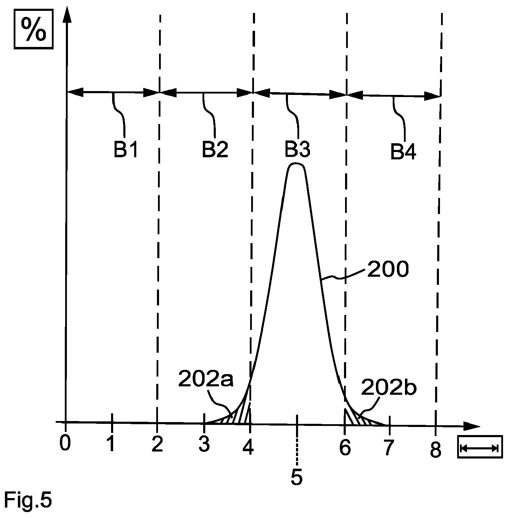

Die Fig. 5 zeigt das Korngrößenspektrum 200 eines weiteren körnigen Materials 100. Die Teilmengen 202a, 202b des körnigen Materials 100, welche den Korngrößenbereichen B2 und B4 zuzuordnen sind, überschreiten einen vorgegebenen Grenzwert nicht, sodass eine dem Korngrößenbereich B3 zugeordnete Konfiguration der Fördereinrichtung 10 zum Ausbringen des körnigen Materials 100 geeignet ist. Dem Korngrößenbereich B3 kann beispielsweise ein Mitnehmerelement 14a-14d zugeordnet sein, welches in die Aufnahmen einer Förderscheibe der Dosiereinrichtung 10 einzusetzen ist.

### Bezugszeichen

- 10: Fördereinrichtung
- 12: Aufnahme
- 14a-14d: Mitnehmerelemente
- 16a-16d: Kornaufnahmetaschen

- 50: elektronisches Gerät
- 52: Kamera

- 100: Material
- 102: Prüfunterlage
- 104: Referenzskala

- 200: Korngrößenspektrum
- 202a, 202b: Teilmengen

- B1-B4: Korngrößenbereiche

## Patentansprüche

1. Verfahren zum Ermitteln einer geeigneten Konfiguration einer rotatorisch angetriebenen Fördereinrichtung (10) für körniges Material (100) einer Dosiereinrichtung einer landwirtschaftlichen Ausbringmaschine, mit den Schritten:
- Ermitteln von Eigenschaften des auszubringenden körnigen Materials (100); und
- Bestimmen einer geeigneten Konfiguration der Fördereinrichtung (10) auf Grundlage der ermittelten Eigenschaften des auszubringenden körnigen Materials (100);
**dadurch gekennzeichnet, dass** das Ermitteln der Eigenschaften des auszubringenden körnigen Materials (100) das Erzeugen und Auswerten einer Bildaufnahme einer Materialprobe des auszubringenden körnigen Materials (100) umfasst.

2. Verfahren nach Anspruch 1,
**dadurch gekennzeichnet, dass** das Erzeugen und/oder Auswerten der Bildaufnahme der Materialprobe des auszubringenden körnigen Materials (100) durch ein portables elektronisches Gerät (50) mit einer Datenverarbeitungseinrichtung erfolgt.

3. Verfahren nach Anspruch 1 oder 2,
**dadurch gekennzeichnet, dass** das Auswerten der Bildaufnahme der Materialprobe des auszubringenden körnigen Materials (100) durch einen entfernten Zentralcomputer erfolgt.

4. Verfahren nach einem der vorstehenden Ansprüche,
**dadurch gekennzeichnet, dass** das Auswerten der Bildaufnahme der Materialprobe des auszubringenden körnigen Materials (100) das Ermitteln von Korngrößen- und/oder Kornformeigenschaften des auszubringenden Materials (100) umfasst.

5. Verfahren nach einem der vorstehenden Ansprüche,
wobei die Fördereinrichtung (10) eine oder mehrere Aufnahmen (12) aufweist, in welche unterschiedliche Mitnehmerelemente (14a-14d) zum Transport des körnigen Materials (100) einsetzbar sind;
**dadurch gekennzeichnet, dass** das Bestimmen einer geeigneten Konfiguration der Fördereinrichtung (10) das Bestimmen zumindest eines geeigneten Mitnehmerelements umfasst.

6. Verfahren nach einem der vorstehenden Ansprüche,
**gekennzeichnet durch** den Schritt:
- Ausgeben der zuvor bestimmten geeigneten Konfiguration der Fördereinrichtung (10),
wobei das Ausgeben der zuvor bestimmten geeigneten Konfiguration der Fördereinrichtung (10) vorzugsweise das Ausgeben eines geeigneten Mitnehmerelements zum Dosieren des auszubringenden körnigen Materials (100) umfasst.

7. Verfahren nach einem der vorstehenden Ansprüche,
**gekennzeichnet durch** den Schritt:
- Untersuchen der Eignung der Fördereinrichtung (10) zum Dosieren des auszubringenden körnigen Materials (100) auf Grundlage der ermittelten Eigenschaften des auszubringenden körnigen Materials (100) und unter Berücksichtigung der Konfigurationsmöglichkeiten der Fördereinrichtung (10).

8. Verfahren nach Anspruch 7,
**gekennzeichnet durch** den Schritt:
- Ausgeben des Ergebnisses der zuvor untersuchten Eignung der Fördereinrichtung (10) zum Dosieren des auszubringenden körnigen Materials (100).

9. Portables elektronisches Gerät (50), mit
- einer Bildaufnahmeeinrichtung zum Erzeugen von Bildaufnahmen,
- einer Datenverarbeitungseinrichtung zu Auswerten von Bildaufnahmen; und
- einer Anzeigeeinrichtung zum optischen Anzeigen von Informationen; **dadurch gekennzeichnet, dass** das portable elektronische Gerät (50) dazu eingerichtet ist, das Verfahren nach einem der vorstehenden Ansprüche auszuführen.

10. System, mit
- einem portablen elektronischen Gerät (50), welches eine Bildaufnahmeeinrichtung zum Erzeugen von Bildaufnahmen und eine Anzeigeeinrichtung zum optischen Anzeigen von Informationen umfasst; und
- einem entfernten Zentralcomputer, welcher eine Datenverarbeitungseinrichtung zu Auswerten von Bildaufnahmen umfasst;
wobei das portable elektronische Gerät (50) und der entfernte Zentralcomputer dazu eingerichtet sind, über eine Drahtlosverbindung Daten untereinander auszutauschen;
**dadurch gekennzeichnet, dass** das System dazu eingerichtet ist, das Verfahren nach einem der Ansprüche 1 bis 8 auszuführen.
